# EUROPÄISCHE PATENTSCHRIFT

(11) **EP 1 332 841 B1**
(45) Veröffentlichungstag und Bekanntmachung des Hinweises auf die Patenterteilung: **21.06.2017**
(21) Anmeldenummer: 03000274.5
(22) Anmeldetag: 08.01.2003
(51) Int. Cl.: B25J 9/16

(54) **Verfahren zur Steuerung eines Roboters und Steuereinheit für einen Roboter**
Method for controlling a robot and control unit for a robot
Méthode de commande d'un robot et unité de commande d'un robot

(30) Priorität: 16.01.2002 DE 10201488
(43) Veröffentlichungstag der Anmeldung: 06.08.2003
(73) Patentinhaber: Dürr Systems AG, 74321 Bietigheim-Bissingen (DE)
(72) Erfinder: Schumacher, Hans, Dr., 71101 Schönaich (DE); Jost, Jürgen, 71726 Benningen (DE); Sandmann, Manfred, 74336 Brackenheim (DE); Block, Torsten, 71154 Nufringen (DE); Frey, Marcus, 71263 Weil der Stadt (DE); Meissner, Alexander, Dr., 70193 Stuttgart (DE)
(74) Vertreter: Heusler, Wolfgang

(56) Entgegenhaltungen:
- EP-A- 0 382 231
- US-A- 4 205 308
- US-A- 6 166 504
- PATENT ABSTRACTS OF JAPAN vol. 2000, no. 03, 30. März 2000 (2000-03-30) -& JP 11 347983 A (MEIDENSHA CORP), 21. Dezember 1999 (1999-12-21)

## Beschreibung

Die Erfindung betrifft ein Verfahren zur Steuerung eines Roboters gemäß Anspruch 1 sowie eine entsprechend ausgestaltete Steuereinheit für einen Roboter gemäß Anspruch 8.

Beim Einsatz von Robotern besteht wegen der oftmals beengten Raumverhältnisse beispielsweise in Roboterkabinen die Gefahr, dass der Roboter aufgrund der teilweise sehr hohen Stellgeschwindigkeiten Raumbegrenzungen wie die Kabinenwand durchstößt, was zu einer Verletzung dahinter befindlicher Personen führen kann. Ein typisches Beispiel sind Lackierroboter für die Serienbeschichtung von Werkstücken wie Fahrzeugkarossen in Sprühkabinen.

Es sind deshalb Robotersteuerungen bekannt, bei denen der Bediener sogenannte Sperrräume für eine Bewegung des Roboters sperren kann, um eine Kollision zu vermeiden. So kann der Bediener beispielsweise vorgeben, dass der sogenannte TCP (Tool Center Point) einen vorgegebenen y-Koordinatenwert und einen vorgegebenen x-Koordinatenwert nicht überschreiten darf. Beim Überschreiten der Grenzen des von dem Bediener definierten Sperrraums stoppt die Robotersteuerung dann die Roboterbewegung, um eine Kollision zu verhindern.

Problematisch hierbei ist, dass die Roboterbewegung bei einem Stopsignal der Robotersteuerung nur mit zeitlicher Verzögerung und nach Durchlaufen eines Halteweges zum Stillstand kommt, so dass der Bediener bei der Festlegung der Grenzen des Sperrraumes einen erheblichen Sicherheitsabstand einhalten muss, wodurch der verfügbare Arbeitsraum des Roboters eingeschränkt wird.

Aus EP-A-0 382 231 ist eine Bewegungssteuerung für einen Drehkran bekannt. Dabei wird in Abhängigkeit von der momentanen Position des Krans, d.h. dem Abstand des zu überwachenden Kranelements von einer Begrenzung, die maximal zulässige Bewegungsgeschwindigkeit des Krans ermittelt, die bei gegebener Bremsverzögerung nicht überschritten werden darf, wenn das zu überwachende Kranelement vor der Begrenzung zum Stillstand kommen soll. Die Kranbewegung wird dann abgebremst, wenn die gemessene Bewegungsgeschwindigkeit des Krans die maximal zulässige Bewegungsgeschwindigkeit überschreitet. Auf diese Weise wird sichergestellt, dass der Kran bei einem eventuellen Not-Halt noch vor der Begrenzung zum Stillstand kommt. Diese Druckschrift enthält jedoch keinen Hinweis auf einen möglichen Einsatz zur Bewegungssteuerung eines Lackierroboters. Darüber hinaus sieht diese Druckschrift lediglich eine Geschwindigkeitsüberwachung, aber keine Positionsüberwachung in dem Sinne vor, dass die Position eines Referenzpunktes auf dem Kran mit einem vorgegebenen Sicherheitsabstand zu einer Begrenzung verglichen wird.

Aus JP H11 347983 A ist ein Verfahren zur Steuerung eines Industrieroboters bekannt, bei dem die Position mindestens eines Referenzpunktes auf dem Roboter erfasst wird. Die Position des Referenzpunktes wird dann mit mindestens einem vorgegebenen Grenzwert verglichen, wobei der Grenzwert einen für die Roboterbewegung gesperrten Bereich definiert. In Abhängigkeit von dem Abstand zwischen der Position des Referenzpunktes und dem vorgegebenen Grenzwert wird dann die Roboterbewegung beeinflusst. Darüber hinaus wird auch die Robotergeschwindigkeit erfasst und in Abhängigkeit von der Position des Referenzpunktes wird dann eine Maximalgeschwindigkeit für den Roboter bestimmt, wobei die Roboterbewegung beeinflusst wird, wenn die Robotergeschwindigkeit die Maximalgeschwindigkeit erreicht oder überschreitet. Auch diese Druckschrift offenbart also nur eine Geschwindigkeitsüberwachung.

Weiterhin ist aus DE 28 50 455 A1 ein Verfahren zur Steuerung eines gegliederten Armes im Raum mit den folgenden Schritten:
- Erfassung der Position mindestens eines Referenzpunktes auf dem Arm,
- Vergleich der Position des Referenzpunktes mit mindestens einem vorgegebenen Grenzwert, wobei der Grenzwert einen für die Armbewegung gesperrten Bereich definiert,
- Beeinflussung der Armbewegung in Abhängigkeit von dem Abstand zwischen der Position des Referenzpunktes und dem vorgegebenen Grenzwert,
- Erfassung der Armgeschwindigkeit, wobei in Abhängigkeit von der Armgeschwindigkeit ein Sicherheitsabstand ermittelt wird und die Armbewegung beeinflusst wird, wenn die Position des Referenzpunktes den Sicherheitsabstand zu dem vorgegebenen Grenzwert erreicht.

Allerdings betrifft diese Druckschrift kein Verfahren zur Steuerung eines Lackierroboters, so dass diese Druckschrift gattungsfremd ist.

Der Erfindung liegt somit die Aufgabe zugrunde, die vorstehend beschriebene Sicherheitssteuerung für einen Roboter dahingehend zu verbessern, dass eine Kollision des Roboters mit Gegenständen und Personen in seiner Umgebung sicher verhindert wird, ohne den verfügbaren Arbeitsbereich des Roboters unnötig einzuschränken.

Die Aufgabe wird hinsichtlich eines entsprechenden Steuerungsverfahrens durch die Merkmale des Anspruchs 1 und hinsichtlich einer entsprechend ausgestalteten Steuereinheit für einen Roboter durch die Merkmale des Anspruchs 8 gelöst.

Die Erfindung umfasst die allgemeine technische Lehre, bei der Sicherheitssteuerung eines Roboters die aktuelle Geschwindigkeit des Roboters zu berücksichtigen. Der Sicherheitsabstand bzw. der entsprechende Halteweg des Roboters in Abhängigkeit von Betrag und/oder Richtung der Robotergeschwindigkeit wird berechnet. Bei einer geringen Geschwindigkeit des Roboters führt dies auch zu einem geringen Sicherheitsabstand, so dass der Roboter näher an die Grenzen des Sperrraumes heranfahren kann. Bei einer größeren Robotergeschwindigkeit ist der Halteweg und damit auch der erforderliche Sicherheitsabstand dagegen größer, so dass der Roboter einen größeren Abstand zu den Grenzen des Sperrraumes einhalten muss. Die Geschwindigkeit des Roboters kann auch mit vorgegebenen Grenzwerten für die Robotergeschwindigkeit verglichen werden, die in Abhängigkeit von der Position bzw. Stellung des Roboters ermittelt werden. So darf der Roboter in der Mitte seines Arbeitsbereiches beispielsweise relativ große Geschwindigkeiten fahren, wohingegen der Roboter in den Randbereichen seines Arbeitsraumes in der Nähe der Grenzen des Sperrraums nur geringe Geschwindigkeiten fahren darf, um rechtzeitig halten zu können.

Beispielsweise kann die maximal zulässige Robotergeschwindigkeit in Abhängigkeit von den Positionskoordinaten eines oder mehrerer Referenzpunkte auf dem Roboter berechnet werden. Es ist jedoch auch möglich, die maximal zulässige Robotergeschwindigkeit in Abhängigkeit von der Position bzw. Stellung des Roboters in den einzelnen Bewegungsfreiheitsgraden zu berechnen. Schließlich können die beiden vorstehend beschriebenen Möglichkeiten auch miteinander kombiniert werden, indem bei der Berechnung der maximal zulässigen Robotergeschwindigkeit sowohl die Positionskoordinaten eines oder mehrerer Referenzpunkte als auch die Position bzw. Stellung des Roboters in den einzelnen Bewegungsfreiheitsgraden berücksichtigt wird.

Vorzugsweise wird die Robotergeschwindigkeit hierbei durch Sensoren bzw. Messeinheiten getrennt für die einzelnen rotatorischen bzw. translatorischen Bewegungsfreiheitsgrade des Roboters erfasst. Es ist jedoch alternativ auch möglich, lediglich die Geschwindigkeit eines Referenzpunktes wie beispielsweise des TCP auf dem Roboter zu messen.

Die Bestimmung der Position bzw. Stellung des Roboters erfolgt vorzugsweise durch eine Messung der Positionskoordinaten eines Referenzpunktes auf dem Roboter in den einzelnen Raumrichtungen eines vorzugsweise kartesischen Koordinatensystems. Bei der Bestimmung der Position bzw. Stellung des Roboters ist es jedoch alternativ auch möglich, die Winkel- bzw. Verschiebestellung in den einzelnen Bewegungsfreiheitsgraden des Roboters zu messen.

Bei der Bestimmung des geschwindigkeitsabhängigen Sicherheitsabstandes bzw. des entsprechenden Halteweges werden vorzugsweise auch weitere Betriebsgrößen des Roboters berücksichtigt, welche den Halteweg beeinflussen. Hierzu zählen beispielsweise die Sensor-Abtastzeit, die Reaktionszeit der Robotersteuerung, Signallaufzeiten sowie Schaltzeiten. Der Halteweg und damit der erforderliche Sicherheitsabstand wird deshalb vorzugsweise als Funktion der Abtastzeit, der Reaktionszeit, der Schaltzeit, der vorgegebenen Trägheit und Geometrie des Roboters, der aktuellen Robotergeschwindigkeit und/oder der maximalen Roboterbeschleunigung berechnet. Die Berücksichtigung der maximalen Roboterbeschleunigung bei der Berechnung des Sicherheitsabstandes bzw. des entsprechenden Haltewegs ist vorteilhaft, weil die Möglichkeit besteht, dass der Roboter unmittelbar vor dem Anhalten noch maximal beschleunigt wurde.

Es ist jedoch alternativ auch möglich, den Halteweg bzw. den entsprechenden Sicherheitsabstand in Abhängigkeit von einer oder mehrerer der vorstehend aufgeführten Betriebsgrößen des Roboters aus einer Tabelle auszulesen, die in einem Speicherelement hinterlegt ist.

In ähnlicher Weise kann auch die maximal zulässige Bewegungsgeschwindigkeit des Roboters entsprechend einer vorgegebenen mathematischen Funktion aus der Stellung bzw. Position des Roboters berechnet werden. Es ist jedoch alternativ auch möglich, dass die maximal zulässige Geschwindigkeit für den Roboter aus einer Tabelle ausgelesen wird.

Weiterhin ist zu erwähnen, dass das erfindungsgemäße Verfahren nicht auf einen einzigen Referenzpunkt auf dem Roboter beschränkt ist. Es ist vielmehr auch möglich, dass auf dem Roboter mehrere Referenzpunkte definiert werden, wobei das erfindungsgemäße Verfahren getrennt für jeden Referenzpunkt durchgeführt wird, um eine maximale Sicherheit zu erreichen. Vorzugsweise werden die einzelnen Referenzpunkte hierbei auf die einzelnen Roboterarme verteilt, so dass auf jedem Roboterarm vorzugsweise mindestens ein Referenzpunkt angeordnet ist.

Andere vorteilhafte Weiterbildungen der Erfindung sind in den Unteransprüchen gekennzeichnet oder werden nachstehend zusammen mit der Beschreibung des bevorzugten Ausführungsbeispiels anhand der Figuren näher erläutert. Es zeigen:
- Figur 1: eine schematische Darstellung eines Roboters mit drei Freiheitsgraden mit den Grenzen eines Sperrraums,
- Figuren 2a und 2b: das erfindungsgemäße Steuerverfahren als Flussdiagramm sowie
- Figur 3 eine: erfindungsgemäße Steuereinheit für einen Roboter als Blockschaltbild.

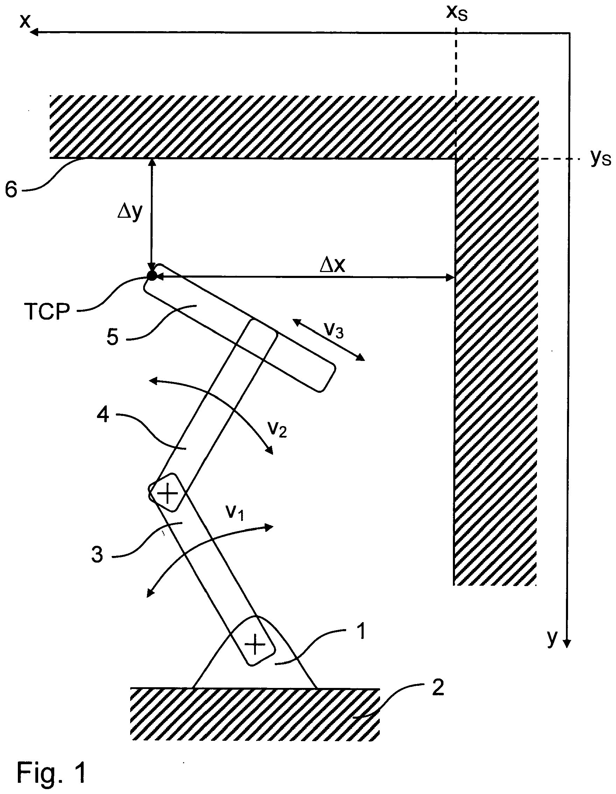

Figur 1 zeigt in stark schematisierter Darstellung einen Roboter mit einem Bodenteil 1, das auf einem Fundament 2 verankert ist, wobei der Roboter drei Roboterarme 3 - 5 aufweist, die eine Bewegung des Roboters in drei Bewegungsfreiheitsgraden ermöglichen.

So kann der Roboterarm 3 mit einer Drehgeschwindigkeit v₁ um das Bodenteil 1 gedreht werden, während der Roboterarm 4 mit der Drehgeschwindigkeit v₂ um ein an dem distalen Ende des Roboterarms 3 angebrachtes Drehgelenk gedreht werden kann. Schließlich kann der Roboterarm 5 mit der Geschwindigkeit v₃ translatorisch in einer an dem distalen Ende des Roboterarms 4 angebrachten Führung verschoben werden.

Die Bewegung der einzelnen Roboterarme erfolgt hierbei in herkömmlicher Weise durch Elektromotoren oder pneumatische oder hydraulische Aktoren, die zur Vereinfachung nicht dargestellt sind.

Durch eine Bewegung der Roboterarme 3 - 5 kann auf diese Weise ein an der Spitze des Roboterarms 5 befindlicher Referenzpunkt TCP (Tool Center Point) innerhalb des Arbeitsraumes des Roboters nahezu beliebig positioniert werden.

Wichtig ist hierbei, dass der Roboterarm 5 nicht eine Begrenzung 6 des Arbeitsraumes durchstößt, da dies aufgrund der teilweise sehr hohen Stellgeschwindigkeiten zu einer Verletzung dahin befindlicher Personen führen kann. In dem dargestellten Ausführungsbeispiel bildet die Grenze 6 des Arbeitsraums des Roboters einen schraffiert dargestellten Sperrraum, in den der Roboter nicht eindringen darf und der beispielsweise den Wänden einer Roboterkabine entspricht. Die Raumkoordinaten x, y des TCP dürfen deshalb die Grenzwerte x_{S}, y_{S} nicht unterschreiten, wobei die Grenzwerte x_{S}, y_{S} die Grenzen des Sperrraums definieren und von dem Bediener entsprechend der räumlichen Arbeitsumgebung des Roboters festgelegt werden können.

Die Roboterbewegung wird hierbei jedoch nicht erst dann gestoppt, wenn der TCP die Grenze 6 des Arbeitsraums des Roboters überschreitet, da dann bereits eine Kollision vorliegt. Vielmehr wird die Roboterbewegung bereits dann gestoppt, wenn der TCP einen vorgegebenen Sicherheitsabstand Δx bzw. Δy zu den Grenzwerten x_{S} bzw. y_{S} unterschreitet, damit der Roboter innerhalb des verbleibenden Sicherheitsabstandes Δx bzw. Δy sicher zum Stillstand kommt.

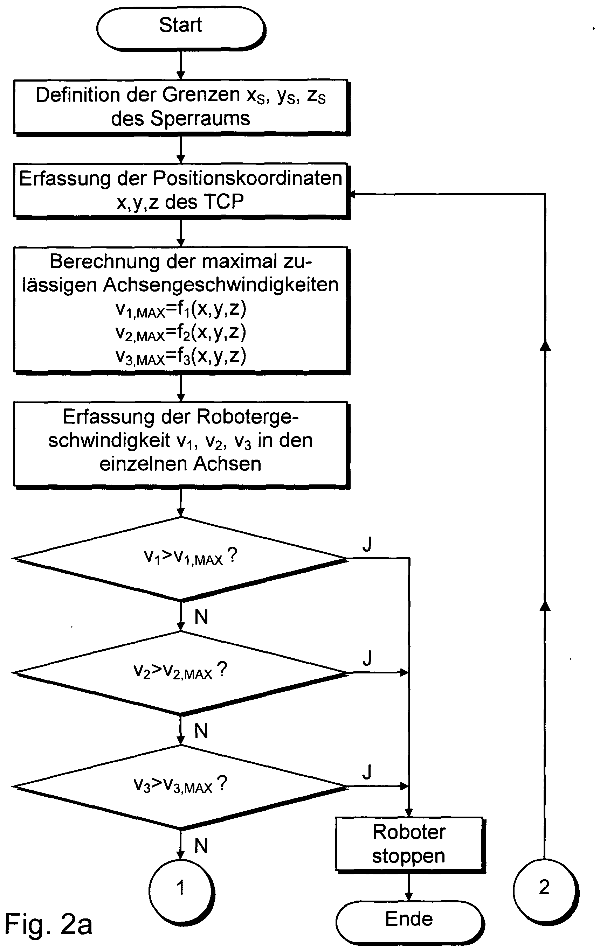

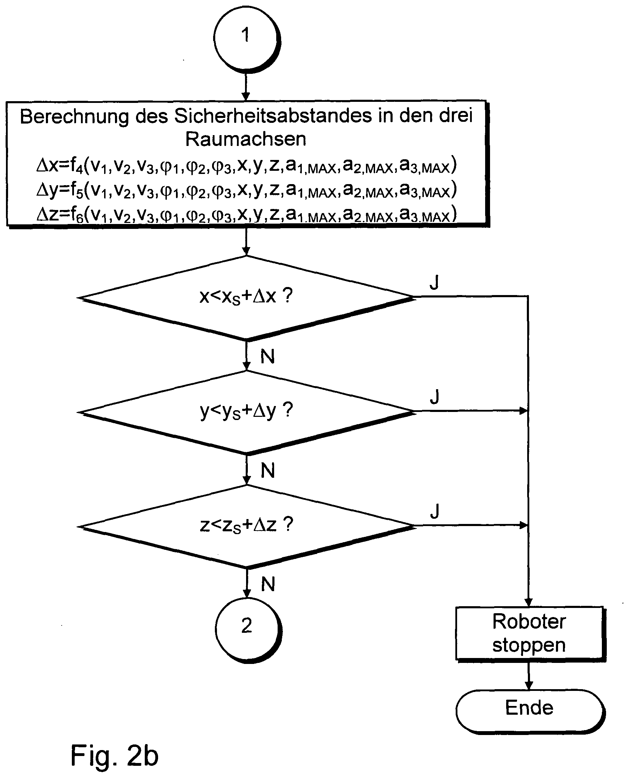

Im Folgenden wird nun unter Bezugnahme auf die Figuren 2a und 2b das erfindungsgemäße Steuerverfahren beschrieben.

Vor dem eigentlichen Betrieb muss der Bediener der Robotersteuerung in einem einmaligen Einstellmodus die Grenzen x_{S}, y_{S}, z_{S} des Sperrraums eingeben, in den der Roboter nicht eindringen darf. Im einfachsten Fall erfolgt die Definition des Sperrraums hierbei in der in Figur 1 gezeigten Weise, indem lediglich flächige Begrenzungen angenommen werden. Es ist jedoch auch möglich, den Sperrraum entsprechend der Arbeitsumgebung des Roboters komplizierter nachzubilden.

Anschließend erfasst die Robotersteuerung im Rahmen einer Endlosschleife zunächst die Positionskoordinaten x, y, z des TCP, um die Position bzw. Stellung des Roboters zu ermitteln.

In einem nächsten Schritt werden dann in Abhängigkeit von der auf diese Weise ermittelten Position des TCP die an dieser Stelle maximal zulässigen Achsengeschwindigkeiten v_{1,MAX}, v_{2,MAX} und v_{3,MAX} berechnet. Die Berechnung der maximal zulässigen Achsengeschwindigkeiten erfolgt hierbei vorzugsweise durch vorgegebene mathematische Funktionen, welche die Robotergeometrie und die Geometrie der Arbeitsumgebung des Roboters berücksichtigen. Hierbei werden in der Mitte des Arbeitsbereichs des Roboters relativ große Achsengeschwindigkeiten zugelassen, wohingegen im Randbereich des Arbeitsbereiches nahe den Grenzen des Sperrraums nur relativ geringe Achsengeschwindigkeiten zugelassen werden, um eine Kollision sicher zu verhindern.

Darüber hinaus besteht auch die Möglichkeit, dass bei der Berechnung der maximal zulässigen Bewegungsgeschwindigkeit auch die Stellung ϕ₁, ϕ₂, ϕ₃ der einzelnen Roboterarme 3 - 5, die Positionskoordinaten x, y, z des TCP sowie die maximal mögliche Roboterbeschleunigung a_{1,MRX}, a_{2,MAX} a_{3,MAX} in den drei Bewegungsfreiheitsgraden berücksichtigt wird.

Im nächsten Schritt wird dann die tatsächliche Robotergeschwindigkeit v₁, v₂, _{V3} in den einzelnen Bewegungsachsen des Roboters gemessen, um diese Messwerte mit den maximal zulässigen Achsengeschwindigkeiten zu vergleichen.

Der Vergleich erfolgt hierbei getrennt für die einzelnen Bewegungsachsen in drei aufeinanderfolgenden Schritten, wobei die Roboterbewegung gestoppt wird, wenn die tatsächlich gemessene Bewegungsgeschwindigkeit in einer Roboterachse den hierzu gemessenen maximal zulässigen Geschwindigkeitswert überschreitet. Im Falle eines derartigen Stops des Roboters wird das Verfahren beendet.

Andernfalls wird das erfindungsgemäße Steuerverfahren dagegen mit den in Figur 2b dargestellten Schritten fortgesetzt, wobei zunächst der Bremsweg des Roboters in den drei Raumachsen berechnet wird, wobei die tatsächlich gemessene Geschwindigkeit des Roboters in den einzelnen Bewegungsachsen berücksichtigt wird.

Anschließend wird dann in drei aufeinanderfolgenden Schritten geprüft, ob die zuvor gemessene Position x, y, z den Sicherheitsabstand Δy, Δy, Δz zu den Grenzen x_{S}, y_{S}, z_{S} des Sperrraums unterschreitet. In einem solchen Fall wird der Roboter sofort gestoppt, um eine Kollision zu verhindern und das Verfahren endet.

Andernfalls wird das Verfahren in einer Endlosschleife mit der in Figur 2a dargestellten Erfassung der Positionskoordinaten x, y, z des TCP fortgesetzt.

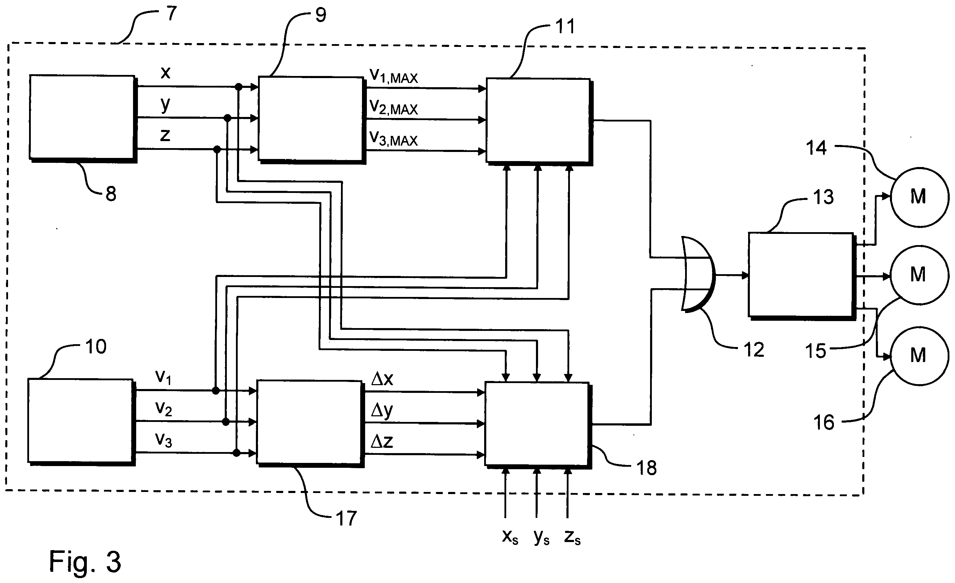

Im Folgenden wird nun der Aufbau einer erfindungsgemäßen Steuereinheit 7 beschrieben, die in stark schematisierter Darstellung in Figur 3 gezeigt ist.

Zur Messung der aktuellen Positionskoordinaten x, y, z weist die Steuereinheit 7 eine Messeinheit 8 auf, die in herkömmlicher Weise funktioniert.

Ausgangsseitig ist die Messeinheit 8 mit einer Recheneinheit 9 verbunden, die in Abhängigkeit von den aktuellen Positionskoordinaten x, y, z des TCP des Roboters die maximal zulässigen Geschwindigkeiten v_{1,MAX}, v_{2,MAX}, v_{3,MAX} des Roboters in den drei Bewegungsfreiheitsgraden berechnet. Die Berechnung der maximal zulässigen Bewegungsgeschwindigkeiten des Roboters durch die Recheneinheit 9 erfolgt hierbei so, dass in der Mitte des Arbeitsbereichs relativ große Bewegungsgeschwindigkeiten zulässig sind, wohingegen in den Randbereichen des Arbeitsraums des Roboters nahe den Grenzen des Sperrraums nur relativ geringe Bewegungsgeschwindigkeiten zulässig sind.

Weiterhin weist die Steuereinheit 7 eine Messeinheit 10 auf, welche die aktuelle Bewegungsgeschwindigkeit v₁, v₂, v₃ in den einzelnen Bewegungsfreiheitsgraden des Roboters misst.

Ausgangsseitig ist die Messeinheit 10 mit einer Auswertungseinheit 11 verbunden, welche die tatsächlichen Bewegungsgeschwindigkeiten v₁, v₂, v₃ mit den maximal zulässigen Bewegungsgeschwindigkeiten v_{1,MAX}, v_{2,MAX}, v_{3,MAX} vergleicht und beim Überschreiten der maximal zulässigen Bewegungsgeschwindigkeit in einer oder mehreren der Bewegungsachsen ein Stopsignal erzeugt, das über ein nachgeschaltetes ODER-Glied 12 an eine Motorsteuerung 13 weitergeleitet wird, wobei die Motorsteuerung 13 drei Elektromotoren 14 - 16 ansteuert. Beim Überschreiten der maximal zulässigen Bewegungsgeschwindigkeit wird der Roboter deshalb sofort angehalten, wodurch eine Kollision verhindert wird.

Darüber hinaus ist die Messeinheit 10 ausgangsseitig mit einer weiteren Recheneinheit 17 verbunden, die in Abhängigkeit von den Bewegungsgeschwindigkeiten v₁, v₂, v₃ in den verschiedenen Bewegungsfreiheitsgraden des Roboters den Bremsweg bzw. den erforderlichen Sicherheitsabstand Δx, Δy, Δz berechnet, wobei zusätzlich Abtastzeiten, Signallaufzeiten und Schaltzeiten berücksichtigt werden.

Ausgangsseitig ist die Recheneinheit 17 mit einer Auswertungseinheit 18 verbunden, die prüft, ob die von der Messeinheit 8 gemessene tatsächliche Position des Roboters den von der Recheneinheit 17 berechneten Sicherheitsabstand unterschreitet. In einem solchen Fall gibt die Auswertungseinheit 18 ein Stopsignal über das ODER-Glied 12 an die Motorsteuerung 13, die daraufhin die Elektromotoren 14 - 16 stoppt. Auf diese Weise wird eine Kollision des Roboters mit den Grenzen des Sperrraums sicher verhindert, ohne dass der zur Verfügung stehende Arbeitsbereich des Roboters unnötig eingeschränkt wird.

Die Erfindung ist nicht auf die vorstehend beschriebenen bevorzugten Ausführungsbeispiele beschränkt. Vielmehr ist eine Vielzahl von Varianten und Abwendlungen denkbar, die ebenfalls in den Schutzbereich der Gegenstände der unabhängigen Ansprüche 1 und 8 fallen.

## Patentansprüche

1. Verfahren zur Steuerung eines Lackierroboters für die Serienbeschichtung von Werkstücken, wobei der Lackierroboter mehrere Bewegungsachsen aufweist, mit den folgenden Schritten:
- Erfassung der Position (x,y,z) mindestens eines Referenzpunktes (TCP) auf dem Lackierroboter,
- Vergleich der Position (x,y,z) des Referenzpunktes (TCP) mit mindestens einem vorgegebenen Grenzwert (x_{S},y_{S},z_{S}), wobei der Grenzwert (x_{S},y_{S},z_{S}) einen für die Roboterbewegung gesperrten Bereich definiert,
- Beeinflussung der Roboterbewegung in Abhängigkeit von dem Abstand zwischen der Position (x,y,z) des Referenzpunktes (TCP) und dem vorgegebenen Grenzwert (x_{S},y_{S},z_{S}),
- Erfassung der Robotergeschwindigkeit (v₁,v₂,v₃),
**dadurch gekennzeichnet,**
a) **dass** in Abhängigkeit von der Robotergeschwindigkeit (v₁,v₂,v₃) ein Sicherheitsabstand (Δx,Δy,Δz) ermittelt wird, wobei die Roboterbewegung beeinflußt wird, wenn die Position (x,y,z) des Referenzpunkts den Sicherheitsabstand (Δx,Δy,Δz) zu dem vorgegebenen Grenzwert (x_{S},y_{S},z_{S}) erreicht oder unterschreitet,
b) **dass** die Robotergeschwindigkeit (v₁,v₂,v₃) in den mehreren Bewegungsachsen des Lackierroboters erfasst wird, und
c) **dass** der Sicherheitsabstand (Δx,Δy,Δz) für mehrere Raumrichtungen in Abhängigkeit von dem Absolutwert der Robotergeschwindigkeit (v₁,v₂,v₃) in den verschiedenen Bewegungsachsen und/oder der Richtung der Roboterbewegung in den einzelnen Bewegungsachsen und/oder der Stellung des Lackierroboters in den einzelnen Bewegungsachsen bestimmt wird.

2. Verfahren nach Anspruch 1, **dadurch gekennzeichnet, dass** in Abhängigkeit von der Position (x,y,z) des Referenzpunktes (TCP) eine Maximalgeschwindigkeit (v_{1,MAX},v_{2,MAX},v_{3,MAX}) für den Lackierroboter bestimmt wird, wobei die Roboterbewegung beeinflusst wird, wenn die Robotergeschwindigkeit (v₁,v₂,v₃) die Maximalgeschwindigkeit (v_{1,MAX},v_{2,MAX},v_{3,MAX}) erreicht oder überschreitet.

3. Verfahren nach Anspruch 2, **dadurch gekennzeichnet, dass** die Roboterbewegung gebremst und/oder angehalten wird, wenn die Position (x,y,z) des Referenzpunkts (TCP) den Sicherheitsabstand (Δx,Δy,Δz) zu dem vorgegebenen Grenzwert (s_{S},y_{S},z_{S}) erreicht oder unterschreitet und/oder wenn die Robotergeschwindigkeit die Maximalgeschwindigkeit (v_{1,MAX},v_{2,MAX},v_{3,MAX}) erreicht oder überschreitet.

4. Verfahren nach einem der vorhergehenden Ansprüche, **dadurch gekennzeichnet, dass** der Sicherheitsabstand (Δx,Δy,Δz) in Abhängigkeit von der Robotergeschwindigkeit (v₁,v₂,v₃) in den einzelnen Bewegungsachsen entsprechend einer vorgegebenen mathematischen Funktion berechnet oder aus einer Tabelle ausgelesen wird.

5. Verfahren nach mindestens einem der vorhergehenden Ansprüche, **dadurch gekennzeichnet, dass** die Position (x,y,z) des Referenzpunktes (TCP) in mehreren Raumrichtungen erfasst wird.

6. Verfahren nach Anspruch 5 und einem der Ansprüche 2 oder 3, **dadurch gekennzeichnet, dass** die Maximalgeschwindigkeit (v_{1,MAX},v_{2,MAX},v_{3,MAX}) für den Lackierroboter für die einzelnen Bewegungsachsen getrennt und in Abhängigkeit von der Position (x,y,z) in den verschiedenen Raumrichtungen bestimmt wird.

7. Verfahren nach Anspruch 6, **dadurch gekennzeichnet, dass** die Maximalgeschwindigkeit (v_{1,MAX},v_{2,MAX},v_{3,MAX}) entsprechend einer vorgegebenen mathematischen Funktion aus der Position (x,y,z) des Referenzpunktes (TCP) berechnet oder aus einer Tabelle ausgelesen wird.

8. Steuereinheit für einen Lackierroboter, der mehrere Bewegungsachsen aufweist, mit
a) einer ersten Messeinheit (8) zur Erfassung der Position (x,y,z) eines Referenzpunktes (TCP) auf dem Lackierroboter,
b) einer zweiten Messeinheit (10) zur Erfassung der Robotergeschwindigkeit (v₁,v₂,v₃) in den mehreren Bewegungsachsen des Lackierroboters,
c) einer Recheneinheit zur Berechnung eines Sicherheitsabstandes (Δx,Δy,Δz) in Abhängigkeit von der Robotergeschwindigkeit (v₁,v₂,v₃), wobei der Sicherheitsabstand (Δx,Δy,Δz) für mehrere Raumrichtungen in Abhängigkeit von dem Absolutwert der Robotergeschwindigkeit (v₁,v₂,v₃) in den verschiedenen Bewegungsachsen und/oder der Richtung der Roboterbewegung in den einzelnen Bewegungsachsen und/oder der Stellung des Lackierroboters in den einzelnen Bewegungsachsen bestimmt wird, und
d) einer Auswertungseinheit zum Vergleich der Position (x,y,z) des Referenzpunktes (TCP) mit dem Sicherheitsabstand (Δx,Δy,Δz) und zur Erzeugung eines Steuersignals in Abhängigkeit von dem Vergleich.

9. Steuereinheit nach Anspruch 8, **dadurch gekennzeichnet, dass** die erste Messeinheit die Position (x,y,z) des Referenzpunktes (TCP) in mehreren Raumrichtungen erfasst.

10. Steuereinheit nach Anspruch 8 oder 9, **dadurch gekennzeichnet, dass** der Lackierroboter mehrere Bewegungsachsen aufweist, wobei die zweite Messeinheit die Robotergeschwindigkeit (v₁,v₂,v₃) getrennt für die einzelnen Bewegungsachsen erfasst.

11. Steuereinheit nach mindestens einem der vorhergehenden Ansprüche 8 bis 10, **dadurch gekennzeichnet, dass** die Auswertungseinheit mit einem Haltemechanismus verbunden ist, um den Lackierroboter mit dem Steuersignal anhalten zu können.

## Claims

1. A method for controlling a painting robot for series coating of workpieces, wherein the painting robot has a plurality of motion axes, with the following steps:
- detecting the position (x, y, z) of at least one reference point (TCP) on the painting robot,
- comparing the position (x, y, z) of the reference point (TCP) with at least one specified limit value (x_{S}, y_{S}, z_{S}), wherein the limit value (x_{S}, y_{S}, z_{S}) defines a region which is blocked for the robot movement,
- influencing the robot movement as a function of the distance between the position (x, y, z) of the reference point (TCP) and the specified limit value (x_{S}, y_{S}, z_{S})
- detecting the robot speed (v₁, v₂, v₃),
**characterised in that**
a) a safety distance (Δx, Δy, Δz) is ascertained as a function of the robot speed (v₁, v₂, v₃), the robot movement being influenced if the position (x, y, z) of the reference point reaches or drops below the safety distance (Δx, Δy, Δz) from the specified limit value (x_{S}, y_{S}, z_{S}),
b) the robot speed (v₁, v₂, v₃) is detected in the plurality of motion axes of the painting robot, and
c) the safety distance (Δx, Δy, Δz) for a plurality of spatial directions is determined as a function of the absolute value of the robot speed (v₁, v₂, v₃) in the different motion axes and/or the direction of the robot movement in the individual motion axes and/or the position of the painting robot in the individual motion axes.

2. A method according to Claim 1, **characterised in that** a maximum speed (v₁,_{MAX}, v₂,_{MAX}, v_{3,MAX}) for the painting robot is determined as a function of the position (x, y, z) of the reference point (TCP), the robot movement being influenced if the robot speed (v₁, v₂, v₃) reaches or exceeds the maximum speed (v₁,_{MAX}, v₂,_{MAX}, v_{3,MAX}).

3. A method according to Claim 2, **characterised in that** the robot movement is braked and/or halted if the position (x, y, z) of the reference point (TCP) reaches or drops below the safety distance (Δx, Δy, Δz) from the specified limit value (x_{S}, y_{S}, z_{S}) and/or if the robot speed reaches or exceeds the maximum speed (v₁,_{MAX}, v₂,_{MAX}, v_{3,MAX}).

4. A method according to one of the preceding claims, **characterised in that** the safety distance (Δx, Δy, Δz) is calculated as a function of the robot speed (v₁, v₂, v₃) in the individual motion axes corresponding to a specified mathematical function or is selected from a table.

5. A method according to at least one of the preceding claims, **characterised in that** the position (x, y, z) of the reference point (TCP) is detected in a plurality of spatial directions.

6. A method according to Claim 5 and one of Claims 2 or 3, **characterised in that** the maximum speed (v₁,_{MAX}, v₂,_{MAX}, v_{3,MAX}) for the painting robot for the individual motion axes is determined separately and as a function of the position (x, y, z) in the different spatial directions.

7. A method according to Claim 6, **characterised in that** the maximum speed (v₁,_{MAX}, v₂,_{MAX}, v_{3,MAX}) is calculated corresponding to a specified mathematical function from the position (x, y, z) of the reference point (TCP) or is selected from a table.

8. A control unit for a painting robot which has a plurality of motion axes, with
a) a first measuring unit (8) for detecting the position (x, y, z) of a reference point (TCP) on the painting robot,
b) a second measuring unit (10) for detecting the robot speed (v₁, v₂, v₃) in the plurality of motion axes of the painting robot,
c) a calculation unit for calculating a safety distance (Δx, Δy, Δz) as a function of the robot speed (v₁, v₂, v₃), wherein the safety distance (Δx, Δy, Δz) for a plurality of spatial directions is determined as a function of the absolute value of the robot speed (v₁, v₂, v₃) in the different motion axes and/or the direction of the robot movement in the individual motion axes and/or the position of the painting robot in the individual motion axes, and
d) an evaluation unit for comparing the position (x, y, z) of the reference point (TCP) with the safety distance (Δx, Δy, Δz) and for generating a control signal dependent on the comparison.

9. A control unit according to Claim 8, **characterised in that** the first measuring unit detects the position (x, y, z) of the reference point (TCP) in a plurality of spatial directions.

10. A control unit according to Claim 8 or 9, **characterised in that** the painting robot has a plurality of motion axes, the second measuring unit detecting the robot speed (v₁, v₂, v₃) separately for the individual motion axes.

11. A control unit according to at least one of the preceding Claims 8 to 10, **characterised in that** the evaluation unit is connected to a holding mechanism in order to be able to halt the painting robot with the control signal.

## Revendications

1. Procédé servant à commander un robot de peinture pour le revêtement en série de pièces, sachant que le robot de peinture présente plusieurs axes de déplacement, comprenant les étapes qui suivent consistant à :
- détecter la position (x, y, z) au moins d'un point de référence (TCP) sur le robot de peinture ;
- comparer la position (x, y, z) du point de référence (TCP) à au moins une valeur limite (xs, ys, zs) prédéfinie, sachant que la valeur limite (xs, ys, zs) définit une zone bloquée pour le déplacement du robot ;
- influencer le déplacement du robot en fonction de la distance entre la position (x, y, z) du point de référence (TCP) et la valeur limite (xs, ys, zs) prédéfinie ;
- détecter la vitesse du robot (v₁, v₂, v₃),
**caractérisé en ce**
a) **qu'**une distance de sécurité (Δx, Δy, Δz) est déterminée en fonction de la vitesse du robot (v₁, v₂, v₃), sachant que le déplacement du robot est influencé quand la position (x, y, z) du point de référence atteint la distance de sécurité (Δx, Δy, Δz) par rapport à la valeur limite (xs, ys, zs) prédéfinie ou présente une valeur inférieure à la distance de sécurité,
b) en ce que la vitesse du robot (v₁, v₂, v₃) est détectée dans les nombreux axes de déplacement du robot de peinture, et
c) en ce que la distance de sécurité (Δx, Δy, Δz) est définie pour les nombreuses directions spatiales en fonction de la valeur absolue de la vitesse du robot (v₁, v₂, v₃) dans les différents axes de déplacement et/ou en fonction de la direction du déplacement du robot dans les divers axes de déplacement et/ou en fonction de l'emplacement du robot de peinture dans les divers axes de déplacement.

2. Procédé selon la revendication 1, **caractérisé en ce qu'**une vitesse maximale (v1,MAX, v2,MAX, v3,MAX) est définie pour le robot de peinture en fonction de la position (x, y, z) du point de référence (TCP), sachant que le déplacement du robot est influencé quand la vitesse du robot (v₁, v₂, v₃) atteint ou dépasse la vitesse maximale (v_{1,MAX}, v_{2,MAX}, v_{3,MAX}).

3. Procédé selon la revendication 2, **caractérisé en ce que** le déplacement du robot est freiné et/ou arrêté quand la position (x, y, z) du point de référence (TCP) atteint la distance de sécurité (Δx, Δy, Δz) par rapport à la valeur limite (xs, ys, zs) prédéfinie ou présente une valeur inférieure à cette dernière et/ou quand la vitesse du robot atteint ou dépasse la vitesse maximale (v_{1,MAX}, v_{2,MAX}, v_{3,MAX}).

4. Procédé selon l'une quelconque des revendications précédentes, **caractérisé en ce que** la distance de sécurité (Δx, Δy, Δz) est calculée en fonction de la vitesse du robot (v₁, v₂, v₃) dans les divers axes de déplacement conformément à une fonction mathématique prédéfinie ou est lue dans un tableau.

5. Procédé selon au moins l'une quelconque des revendications précédentes, **caractérisé en ce que** la position (x, y, z) du point de référence (TCP) est détectée dans de nombreuses directions spatiales.

6. Procédé selon la revendication 5 et l'une quelconque des revendications 2 ou 3, **caractérisé en ce que** la vitesse maximale (v_{1,MAX}, v_{2,MAX}, v_{3,MAX}) est définie pour le robot de peinture séparément pour les divers axes de déplacement et en fonction de la position (x, y, z) dans les différentes directions spatiales.

7. Procédé selon la revendication 6, **caractérisé en ce que** la vitesse maximale (v_{1,MAX}, v_{2,MAX}, v_{3,MAX}) est calculée conformément à une fonction mathématique prédéfinie à partir de la position (x, y, z) du point de référence (TCP) ou est lue dans un tableau.

8. Unité de commande pour un robot de peinture, qui présente plusieurs axes de déplacement, comprenant
a) une première unité de mesure (8) servant à détecter la position (x, y, z) d'un point de référence (TCP) sur le robot de peinture,
b) une deuxième unité de mesure (10) servant à détecter la vitesse du robot (v₁, v₂, v₃) dans les nombreux axes de déplacement du robot de peinture,
c) une unité de calcul servant à calculer une distance de sécurité (Δx, Δy, Δz) en fonction de la vitesse du robot (v₁, v₂, v₃), sachant que la distance de sécurité (Δx, Δy, Δz) est définie pour les nombreuses directions spatiales en fonction de la valeur absolue de la vitesse du robot (v₁, v₂, v₃) dans les différents axes de déplacement et/ou en fonction de la direction du déplacement de robot dans les divers axes de déplacement et/ou en fonction de la position du robot de peinture dans les divers axes de déplacement, et
d) une unité d'analyse servant à comparer la position (x, y, z) du point de référence (TCP) à la distance de sécurité (Δx, Δy, Δz) et servant à produire un signal de commande en fonction de la comparaison.

9. Unité de commande selon la revendication 8, **caractérisée en ce que** la première unité de mesure détecte la position (x, y, z) du point de référence (TCP) dans de nombreuses directions spatiales.

10. Unité de commande selon la revendication 8 ou 9, **caractérisée en ce que** le robot de peinture présente plusieurs axes de déplacement, sachant que la deuxième unité de mesure détecte la vitesse du robot (v₁, v₂, v₃) séparément pour les divers axes de déplacement.

11. Unité de commande selon au moins l'une quelconque des revendications précédentes 8 à 10, **caractérisée en ce que** l'unité d'analyse est reliée à un mécanisme de maintien, afin de pourvoir arrêter le robot de peinture avec le signal de commande.
